Europäisches Patentamt

European Patent Office

Office européen des brevets

(19)

(11) Veröffentlichungsnummer: **0 356 889**
**A2**

(12) # EUROPÄISCHE PATENTANMELDUNG

(21) Anmeldenummer: 89115500.4

(51) Int. Cl.⁵: **B29C 65/08**

(22) Anmeldetag: 23.08.89

(30) Priorität: 30.08.88 DE 3829307

(43) Veröffentlichungstag der Anmeldung:
07.03.90 Patentblatt 90/10

(84) Benannte Vertragsstaaten:
AT BE CH DE ES FR GB IT LI NL SE

(71) Anmelder: 4P Nicolaus Kempten GmbH
Ulmer Strasse 18
D-8960 Kempten(DE)

Anmelder: WILHELM FISCHER
SPEZIALMASCHINENFABRIK GMBH
Weidacher Strasse 1-3
D-8968 Durach(DE)

(72) Erfinder: Fischer, Wilhelm
Weidacher Strasse 1-3
D-8968 Durach(DE)

(74) Vertreter: Hutzelmann, Gerhard
Duracher Strasse 22
D-8960 Kempten(DE)

(54) Verfahren und Vorrichtung zum Zusammenschweissen von Kunststoffoberflächen.

(57) Verfahren und Vorrichtung zum Zusammenschweißen von einander zugekehrten Kunststoffoberflächen zweier Gegenstände mittels Ultraschall, wobei die Gegenstände während der Ultraschallbeaufschlagung zwangsweise durch das Ultraschallfeld befördert werden.

Fig. 1

EP 0 356 889 A2

## Verfahren und Vorrichtung zum Zusammenschweißen von Kunststoffoberflächen

Die Erfindung bezieht sich auf ein Verfahren zum Zusammenschweißen von einander zugekehrten Kunststoffoberflächen zweier Gegenstände mittels Ultraschall sowie auf eine Vorrichtung zum Durchführen des Verfahrens.

Das Verschweißen von Kunststoffen mittels Ultraschall hat sich als sehr vorteilhaft erwiesen, doch ist die Verweilzeit in der Ultraschallschweißeinrichtung verhältnismäßig lang.

Der Erfindung liegt die Aufgabe zugrunde, ein Verfahren sowie eine Vorrichtung vorzuschlagen, mit denen das Ultraschallschweißen schnell und damit rationell durchgeführt werden kann.

Diese Aufgabe wird erfindungsgemäß dadurch gelöst, daß die Gegenstände während der Ultraschallbeaufschlagung zwangsweise durch das Ultraschallfeld befördert werden.

Damit werden die Gegenstände auch während des Schweißvorganges kontinuierlich bewegt, was eine erhebliche Verringerung der Durchlaufzeit bedeutet.

Bei einer vorteilhaften Vorrichtung zur Durchführung dieses Verfahrens sind erfindungsgemäß zwei Transportketten vorgesehen, die parallel zueinander verlaufen und die Gegenstände zwischen sich einspannen, und im Transportweg dieser beiden Transportketten ist eine Ultraschallschweißeinrichtung mit einer Sonotrode und einem zugehörigen Amboß angeordnet.

Sehr vorteilhaft ist es auch, wenn erfindungsgemäß in Förderrichtung hinter der Ultraschallschweißeinrichtung mehrere Andruckrollenpaare angeordnet sind. Damit kann die Durchzugsgeschwindigkeit noch weiter erhöht werden, da zwischen Sonotrode und Amboß im wesentlichen nur der Kunststoff erwärmt werden muß, da das Aneinanderpressen und Abkühlen weitgehend zwischen den Andruckrollenpaaren erfolgen kann.

Eine vorteilhafte Weiterbildung liegt erfindungsgemäß darin, daß jeweils eine Andruckrolle der Andruckrollenpaare ortsfest gelagert und die andere federelastisch an diese andrückbar ist. Mit diesem federelastischen Andrücken ist der auf die Gegenstände wirkende Preßdruck exakt einstell- und haltbar.

Eine sehr vorteilhafte Ausgestaltung liegt erfindungsgemäß auch darin, daß die Sonotrode an der dem Amboß zugekehrten Seite oben und unten jeweils eine im Querschnitt bogenförmig ausgebildete, über die ganze Breite durchlaufende Rippe aufweist.

Beim Verschweißen von gefüllten Packungen kann es vorkommen, daß Füllgut zwischen die beiden zu verschweißenden Wände gekommen ist; durch diese Ausgestaltung wird dann erreicht, daß das Füllgut weggedrückt und trotzdem zwei dichte Schweißnähte hergestellt werden.

Eine weitere vorteilhafte Ausgestaltung liegt auch darin, daß erfindungsgemäß die Sonotrode von oben gesehen zwei parallel zueinander verlaufende, schlitzförmige Ausnehmungen aufweist. Trotz des angewandten Durchlauf-Schweißverfahrens ist es notwendig, daß die Sonotrode eine gewisse Breite aufweist; durch diese Ausgestaltung wird dabei erreicht, daß sich die Ultraschallwellen gleichmäßig über die ganze Breite der Sonotrode verteilen.

Sehr vorteilhaft ist es auch, wenn erfindungsgemäß die Sonotrode und die federelastisch andrückbaren Andruckrollen auf einem gemeinsamen, abklappbaren Gestell angeordnet sind. Dadurch ist es möglich, sowohl zum Reinigen als auch bei Störungen die Ultraschallschweißeinrichtung und die nachgeschalteten Andruckwalzenpaare zu öffnen.

Für das Wiederverschließen ist es günstig, wenn erfindungsgemäß zwischen dem Gestell und dem ortsfesten Teil der Vorrichtung ein Anschlagteil vorgesehen ist, welches den Abstand der Sonotrode vom Amboß bzw. der Rollen der Andruckrollenpaare fixiert.

Damit entfällt beim Wiederverschließen ein zeitraubendes neues Einjustieren.

Für die Sicherheit des Transportes durch die Vorrichtung ist es sehr vorteilhaft, wenn erfindungsgemäß die einander zugekehrten Seiten der Transportketten mit gummielastischen Auflagen versehen sind.

In der Zeichnung ist die Erfindung anhand eines Ausführungsbeispiels veranschaulicht. Dabei zeigen:

Fig. 1 eine schematische Draufsicht auf eine Schweißvorrichtung mit einer Sonotrode und Amboß sowie mehreren Andruckrollenpaaren,

Fig. 2 eine Seitenansicht einer Sonotrode,

Fig. 3 die Sonotrode von der Seite gesehen in größerem Maßstab,

Fig. 4 die Sonotrode von oben gesehen und

Fig. 5 ein Anschlagteil zwischen dem Lagergestell für die Sonotrode bzw. Andruckrollen und dem übrigen Vorrichtungsteil.

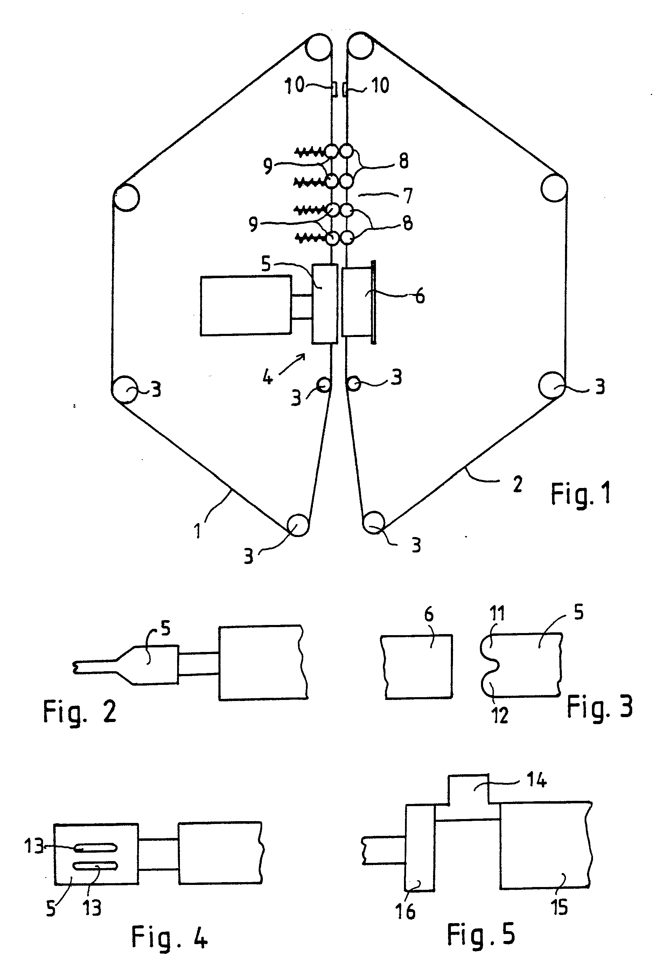

Mit 1 bzw. 2 sind in Fig. 1 zwei Transportketten bezeichnet, die über mehrere Umlenk- und Antriebswalzen 3 geführt sind und einen Abschnitt aufweisen, in dem beide parallel und in geringem Abstand voneinander verlaufen. In Transportrichtung vor diesem parallelen Abschnitt verlaufen die beiden Transportketten 1 und 2 in einem spitzen Winkel aufeinander zu. Am Anfang der parallelen Strecke ist eine Ultraschallschweißeinrichtung angeordnet, die aus einer Sonotrode 5 und einem Amboß 6 besteht. Unmittelbar hinter dieser Ultraschallschweißeinrichtung liegen mehrere Rollenpaare 7, die jeweils von einer ortsfest gelagerten Andruckrolle 8 und einer federelastisch gelagerten Andruckrolle 9 gebildet sind. Die beiden Transportketten sind mit gummielastischen Auflagen 10 versehen, zwischen denen die zu transportierenden Gegenstände eingeklemmt werden.

Die Sonotrode 5 ist - wie in Fig. 2 dargestellt - an ihrem dem Amboß 6 zugekehrten Ende verhältnismäßig schmal ausgebildet, was für die Konzentration der Ultraschallwellen besonders günstig ist.

Wie besonders aus Fig. 3 ersichtlich, hat die Sonotrode 5 an ihrem dem Amboß 6 zugekehrten Ende oben und unten je eine Rippe 11 und 12, die beide über die ganze Breite verlaufen. Von oben gesehen hat die Sonotrode 5 zwei parallel zueinander verlaufende, schlitzförmige Ausnehmungen 13, die über die ganze Höhe der Sonotrode durchgehen und bewirken, daß die Ultraschallwellen über die Breite der Sonotrode gleichmäßig verteilt werden.

In Fig. 5 ist ein Anschlagteil 14 dargestellt, das zwischen einem Gestell 15 und einem feststehenden Teil 16 der übrigen Vorrichtung liegt. Das Anschlagteil 14 dient als Justierung für das Gestell 15, das die Sonotrode 5 und die Andruckrollen 9 trägt und abklappbar ausgebildet ist.

## Ansprüche

1. Verfahren zum Zusammenschweißen von einander zugekehrten Kunststoffoberflächen zweier Gegenstände mittels Ultraschall, **dadurch gekennzeichnet,** daß die Gegenstände während der Ultraschallbeaufschlagung zwangsweise durch das Ultraschallfeld befördert werden.

2. Vorrichtung zum Durchführen des Verfahrens gemäß Anspruch 1, **dadurch gekennzeichnet,** daß zwei Transportketten (1,2) vorgesehen sind, die parallel zueinander verlaufen und die Gegenstände zwischen sich einspannen, und daß im Transportweg dieser beiden Transportketten eine Ultraschallschweißeinrichtung (4) mit einer Sonotrode (5) und einem zugehörigen Amboß (6) angeordnet ist.

3. Vorrichtung nach Anspruch 2, **dadurch gekennzeichnet,** daß in Förderrichtung hinter der Ultraschallschweißeinrichtung (4) mehrere Andruckrollenpaare (7) angeordnet sind.

4. Vorrichtung nach Anspruch 3, **dadurch gekennzeichnet,** daß jeweils eine Andruckrolle (8) der Andruckrollenpaare (7) ortsfest gelagert und die andere (9) federelastisch an diese andrückbar ist.

5. Vorrichtung nach Anspruch 2,3 oder 4, **dadurch gekennzeichnet,** daß die Sonotrode (5) an der dem Amboß (6) zugekehrten Seite oben und unten jeweils eine im Querschnitt bogenförmig ausgebildete, über die ganze Breite durchlaufende Rippe (11,12) aufweist.

6. Vorrichtung nach Anspruch 2,3,4, oder 5, **dadurch gekennzeichnet,** daß die Sonotrode (5) von oben gesehen zwei parallel zueinander verlaufende, schlitzförmige Ausnehmungen (13) aufweist.

7. Vorrichtung nach einem der vorhergehenden Ansprüche, **dadurch gekennzeichnet,** daß die Sonotrode (5) und die federelastisch andrückbaren Andruckrollen (9) auf einem gemeinsamen, abklappbaren Gestell (15) angeordnet sind.

8. Vorrichtung nach Anspruch 7, **dadurch gekennzeichnet,** daß zwischen dem Gestell (15) und dem ortsfesten Teil (16) der Vorrichtung ein Anschlagteil (14) vorgesehen ist, welches den Abstand der Sonotrode (5) vom Amboß (6) bzw. den Rollen (8,9) der Anlenkrollenpaare (7) fixiert.

9. Vorrichtung nach einem der vorhergehenden Ansprüche, **dadurch gekennzeichnet,** daß die einander zugekehrten Seiten der Transportketten (1,2) mit gummielastischen Auflagen (10) versehen sind.

10  10

9  8
7
9  8

5
6

4

3  3
3  3

1  2  Fig. 1

3
3

Fig. 2

5

6  11  5

12  Fig. 3

14

13

13
5  13

16  15

Fig. 4  Fig. 5